# EUROPEAN PATENT SPECIFICATION

(11) **EP 2 762 528 B1**
(45) Date of publication and mention of the grant of the patent: **11.03.2020**
(21) Application number: 11873064.7
(22) Date of filing: 30.09.2011
(51) Int. Cl.: C08L 61/34, C08J 5/24, C08L 63/00, C08L 77/02

(54) **BENZOXAZINE RESIN COMPOSITION, AND FIBER-REINFORCED COMPOSITE MATERIAL**
BENZOXAZINHARZZUSAMMENSETZUNG UND FASERVERSTÄRKTER VERBUNDSTOFF
COMPOSITION DE RÉSINE DE BENZOXAZINE ET MATÉRIAU COMPOSITE RENFORCÉ DE FIBRES

(43) Date of publication of application: 06.08.2014
(73) Proprietor: JX Nippon Oil & Energy Corporation, Chiyoda-ku Tokyo 100-8162 (JP); Subaru Corporation, Tokyo 150-8554 (JP)
(72) Inventor: FUKUDA Yoshihiro, Tokyo 100-8162 (JP); IHARA Hiroyasu, Tokyo 100-8162 (JP); MATSUMOTO Takayuki, Tokyo 100-8162 (JP); SEKINE Naoyuki, Tokyo 150-8554 (JP); YAMAGUCHI Eikatsu, Tokyo 150-8554 (JP)
(74) Representative: Carpmaels & Ransford LLP
(86) International application number: PCT/JP2011/072565
(87) International publication number: WO 2013/046434

(56) References cited:
- EP-A1- 0 927 737
- WO-A1-2008/130484
- WO-A1-2010/092723
- WO-A1-2010/092723
- JP-A- H10 140 004
- JP-A- 2004 155 892
- JP-A- 2005 320 546
- JP-A- 2007 016 121
- JP-A- 2009 097 014
- JP-A- 2009 286 895
- US-A1- 2008 081 170

## Description

The present invention relates to benzoxazine resin compositions capable of achieving various excellent mechanical properties, particularly those required for aircraft applications, at high levels, fiber-reinforced composite materials utilizing the resin composition, suitable for use in aircraft-, ship-, automobile-, sport-, and other general industry-related applications, and capable of further weight saving particularly by concurrently achieving various excellent mechanical properties at high levels, and prepreg useful for obtaining the composite materials.

Fiber-reinforced composite materials composed of various fibers and a matrix resin are widely used in aircrafts, ships, automobiles, sporting goods, and other general industrial applications for their excellent dynamical properties.

The range of applications of fiber-reinforced composite materials has recently been expanding more and more as their performance in actual use is accumulated.

As examples of such fiber-reinforced composite materials, there have been proposed those utilizing compounds having a benzoxazine ring, for example in Patent Publications 1 and 2. These compounds having a benzoxazine ring have excellent resistance to moisture and heat, but inferior toughness . Attempts have been made to compensate for this defect by admixing epoxy resin or various fine resin particles.

On the other hand, there has been a demand for further weight saving by achieving, among the dynamical properties required for aircraft application, particularly the compression after impact strength (abbreviated as CAI hereinafter), the interlaminar shear strength (abbreviated as ILSS hereinafter) at high temperature and humidity, and the bending fracture toughness, all at the same time at high levels. In addition, for maintaining high-temperature characteristics, the glass transition temperature of the resin material used therein needs to be maintained at a high level. However, it cannot be said that the examples specifically disclosed in the Patent Publications mentioned above are capable of necessarily achieving these properties concurrently at high levels.

As a technology for improving the dynamical properties, Patent Publication 3, for example, discloses to add polyamide 12 fine particles to a thermosetting resin, such as epoxy resin, for improving CAI.

Fiber-reinforced composite materials utilizing such technology are capable of maintaining the CAI at a certain high level, but are yet to achieve a high ILSS at high temperature and humidity at the same time.

Thus, for substituting the existing composite materials, materials are demanded to be developed which have higher levels of various mechanical properties at the same time for lighter weight than the existing.

Patent Publication 4 relates to benzoxazine resin compositions.

Patent Publication 5 relates to woven fabric prepregs.

Patent Publication 6 relates to pre-impregnated composite materials.

Patent Publication 7 relates to pre-impregnated composite materials that are used in making high performance composite parts.
Patent Publication 1: JP-2007-16121-A
Patent Publication 2: JP-2010-13636-A
Patent Publication 3: JP-2009-286895-A
Patent Publication 4: WO 2010/092723 A1
Patent Publication 5: EP 0 927 737 A1
Patent Publication 6: US 2008/081170 A1
Patent Publication 7: WO 2008/130484 A1

It is an object of the present invention to provide a fiber-reinforced composite material capable of concurrently achieving excellent CAI, ILSS, and bending fracture toughness at high levels, and also maintaining a high glass transition temperature of the resin material therein, as well as a prepreg and a benzoxazine resin composition therefor.

The present inventors have made intensive researches for achieving the above object, and found out that various mechanical properties, which are otherwise in a trade-off, are unexpectedly achieved at high levels at the same time by blending (A) a particular compound having a benzoxazine ring, (B) an epoxy resin, (C) a curing agent, (D) a toughness improver, and polyamide 12 particles of a particular particle size at a particular ratio, which falls within a range narrower than conventionally proposed, and also adjusting the blending ratio depending on the average particle size of the polyamide 12 particles, to thereby complete the present invention.

According to the present invention, there is provided a benzoxazine resin composition (sometimes referred to as the first composition of the present invention hereinbelow) comprising:
(A) a compound having in its molecule a benzoxazine ring represented by formula (1): 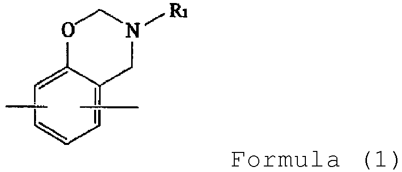 wherein R₁ stands for a chain alkyl group having 1 to 12 carbon atoms, a cyclic alkyl group having 3 to 8 carbon atoms, a phenyl group, or a phenyl group substituted with a chain alkyl group having 1 to 12 carbon atoms or a halogen, and a hydrogen atom is bonded to at least one of the carbon atoms of the aromatic ring at ortho- or para-position with respect to the carbon atom to which the oxygen atom is bonded;
(B) an epoxy resin;
(C) a curing agent;
(D) a toughness improver; and
(E1) polyamide 12 particles having an average particle size of not smaller than 1 µm and smaller than 15 µm;
wherein a content of said component (A) is 70 to 78 mass% and a content of said component (B) is 22 to 30 mass%, with a total of components (A) and (B) being 100 mass%,
wherein, with respect to 100 parts by mass of the total of components (A) and (B), a content of said component (C) is 5 to 20 parts by mass, a content of said component (D) is 3 to 20 parts by mass, and a content of said component (E1) is 20 to 30 parts by mass, and
wherein component (D) is dispersed in the composition and in a uniform or commingled state.

According to the present invention, there is also provided a benzoxazine resin composition (sometimes referred to as the second composition of the present invention hereinbelow) comprising components (A) to (D) mentioned above, and (E2) polyamide 12 particles having an average particle size of not smaller than 15 µm and not larger than 60 µm;
wherein a content of said component (A) is 70 to 78 mass% and a content of said component (B) is 22 to 30 mass%, with a total of components (A) and (B) being 100 mass%;
wherein, with respect to 100 parts by mass of the total of components (A) and (B), a content of said component (C) is 5 to 20 parts by mass, a content of said component (D) is 3 to 20 parts by mass, and a content of said component (E2) is not less than 5 parts by mass and less than 20 parts by mass, and
wherein component (D) is dispersed in the composition and in a uniform or commingled state.

According to the present invention, there is further provided prepreg obtained by impregnating a reinforcing fiber substrate with the first or second composition of the present invention (sometimes referred to collectively as the composition of the present invention hereinbelow).

According to the present invention, there is also provided a fiber-reinforced composite material comprising a cured product of the present composition and a reinforcing fiber substrate.

The fiber-reinforced composite material of the present invention, employing the composition of the present invention, is capable of concurrently achieving excellent CAI, ILSS, and bending fracture toughness at high levels, and also maintaining a high glass transition temperature of the resin material therein. Thus, the fiber-reinforced composite material of the present invention is suitable for use in aircraft-, ship-, automobile-, sport-, and other general industry-related applications, and particularly useful in aircraft-related applications.

The present invention will now be explained in detail.

In the composition of the present invention, component (A) is a benzoxazine resin represented by formula (1) above.

In formula (1), R₁ stands for a chain alkyl group having 1 to 12 carbon atoms, a cyclic alkyl group having 3 to 8 carbon atoms, a phenyl group, or a phenyl group substituted by a chain alkyl group having 1 to 12 carbon atoms or a halogen.

The chain alkyl group having 1 to 12 carbon atoms may be, for example, amethyl, ethyl, propyl, isopropyl, n-butyl, isobutyl, or t-butyl group.

The cyclic alkyl group having 3 to 8 carbon atoms may be, for example, a cyclopentyl or cyclohexyl group.

The phenyl group substituted with a chain alkyl group having 1 to 12 carbon atoms or a halogen may be, for example, an o-methylphenyl, m-methylphenyl, p-methylphenyl, o-ethylphenyl, m-ethylphenyl, p-ethylphenyl, o-t-butylphenyl, m-t-butylphenyl, p-t-butylphenyl, o-chlorophenyl, or o-bromophenyl group.

Among the above examples, a methyl, ethyl, propyl, phenyl, or o-methylphenyl group is preferred as R₁ for its ability to impart good handleability.

As the benzoxazine resin of component (A), for example, the monomers represented by the following formulae, oligomers obtained by polymerizing some molecules of the monomers, or reaction products of at least one of the monomers and a compound having a benzoxazine ring of a structure other than these monomers, are preferred:

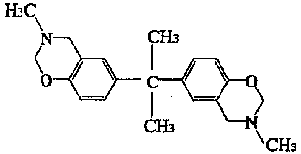

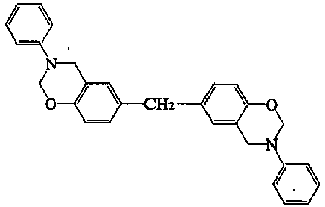

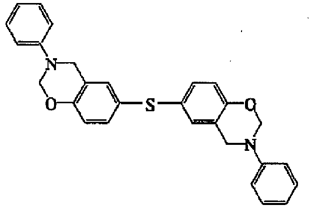

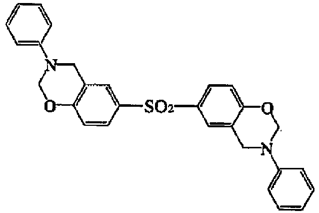

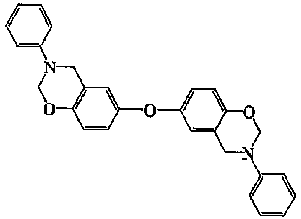

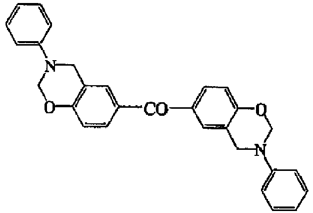

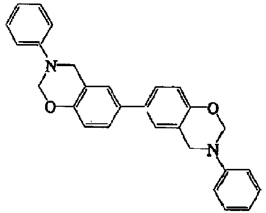

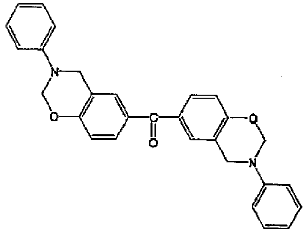

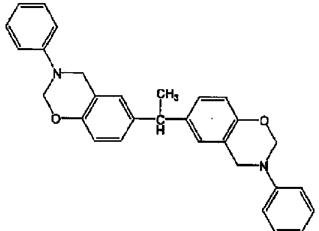

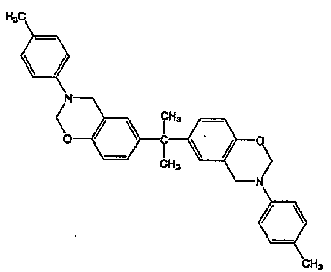

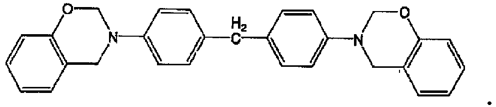

Component (A) imparts excellent resistance to fire since the benzoxazine ring undergoes ring-opening polymerization to form a skeleton similar to that of a phenol resin. Component (A), due to its dense structure, also imparts excellent mechanical properties such as low water absorption and high elasticity.

The epoxy resin of component (B) of the present composition controls the viscosity of the composition and increases the curability of the composition.

Component (B) may preferably be an epoxy resin derived from a precursor compound, such as amines, phenols, carboxylic acid, or compounds having an intramolecular unsaturated carbon.

Examples of the epoxy resins derived from precursor amines may include glycidyl compounds, such as tetraglycidyl diamino diphenyl methane or xylene diamine, triglycidyl amino phenol, or glycidyl aniline; position isomers thereof; or alkyl group- or halogen-substituted products thereof.

In the following, when commercial products are referred to as examples, complex viscoelasticity η* at 25 °C measured with the dynamic viscoelastometer to be discussed later is mentioned as a viscosity for those in a liquid form.

Examples of commercial products of tetraglycidyl diamino diphenyl methane may include SUMIEPOXY (registered trademark, omitted hereinafter) ELM434 (manufactured by SUMITOMO CHEMICAL CO., LTD.), ARALDITE (registered trademark, omitted hereinafter) MY720, ARALDITE MY721, ARALDITE MY9512, ARALDITE MY9612, ARALDITE MY9634, ARALDITE MY9663 (all manufactured by HUNTSMAN ADVANCED MATERIALS), and jER (registered trademark, omitted hereinafter) 604 (manufactured by MITSUBISHI CHEMICAL).

Examples of commercial products of triglycidyl amino phenol may include jER 630 (viscosity: 750 mPa·s) (manufactured by MITSUBISHI CHEMICAL), ARALDITE MY0500 (viscosity: 3500 mPa·s) and MY0510 (viscosity: 600 mPa·s) (both manufactured by HUNTSMAN ADVANCED MATERIALS), and ELM100 (viscosity: 16000 mPa·s) (manufactured by SUMITOMO CHEMICAL CO., LTD.).

Examples of commercial products of glycidyl anilines may include GAN (viscosity: 120 mPa·s) and GOT (viscosity: 60 mPa·s) (both manufactured by NIPPON KAYAKU CO., LTD.).

Examples of epoxy resins of glycidyl ether type derived from precursor phenols may include bisphenol A type epoxy resin, bisphenol F type epoxy resin, bisphenol S type epoxy resin, epoxy resin having a biphenyl skeleton, phenol novolak type epoxy resin, cresol novolak type epoxy resin, resorcinol type epoxy resin, epoxy resin having a naphthalene skeleton, triphenylmethane type epoxy resin, phenol aralkyl type epoxy resin, dicyclopentadiene type epoxy resin, or diphenylfluorene type epoxy resin; various isomers thereof; and alkyl group- or halogen-substituted products thereof.

Epoxy resins obtained by modifying an epoxy resin derived from a precursor phenol with urethane or isocyanate are also included in this type.

Examples of commercial products of liquid bisphenol A type epoxy resins may include jER 825 (viscosity: 5000 mPa·s), jER 826 (viscosity: 8000 mPa·s), jER827 (viscosity: 10000 mPa·s), jER 828 (viscosity: 13000 mPa·s) (all manufactured by MITSUBISHI CHEMICAL), EPICLON (registered trademark, omitted hereinafter) 850 (viscosity: 13000 mPa·s) (manufactured by DIC CORPORATION), EPOTOHTO (registered trademark, omitted hereinafter) YD-128 (viscosity: 13000 mPa·s) (manufactured by NIPPON STEEL CHEMICAL), DER-331 (viscosity: 13000 mPa·s), and DER-332 (viscosity: 5000 mPa·s) (manufactured by THE DOW CHEMICAL COMPANY).

Examples of commercial products of solid or semisolid bisphenol A type epoxy resins may include jER 834, jER 1001, jER 1002, jER 1003, jER 1004, jER 1004AF, jER 1007, and jER 1009 (all manufactured by MITSUBISHI CHEMICAL).

Examples of commercial products of liquid bisphenol F type epoxy resins may include jER 806 (viscosity: 2000 mPa·s), jER 807 (viscosity: 3500 mPa·s), jER 1750 (viscosity: 1300 mPa·s), jER (all manufactured by MITSUBISHI CHEMICAL), EPICLON 830 (viscosity: 3500 mPa·s) (manufactured by DIC CORPORATION), EPOTOHTO YD-170 (viscosity: 3500 mPa·s), and EPOTOHTO YD-175 (viscosity: 3500 mPa·s) (both manufactured by NIPPON STEEL CHEMICAL) .

Examples of commercial products of solid bisphenol F type epoxy resins may include 4004P, jER 4007P, jER 4009P (all manufactured by MITSUBISHI CHEMICAL), EPOTOHTO YDF2001, and EPOTOHTO YDF2004 (both manufactured by NIPPON STEEL CHEMICAL).

Examples of bisphenol S type epoxy resins may include EXA-1515 (manufactured by DIC CORPORATION).

Examples of commercial products of epoxy resins having a biphenyl skeleton may include jER YX4000H, jER YX4000, jER YL6616 (all manufactured by MITSUBISHI CHEMICAL), and NC-3000 (manufactured by NIPPON KAYAKU CO., LTD.).

Examples of commercial products of phenol novolak type epoxy resins may include jER 152, jER 154 (both manufactured by MITSUBISHI CHEMICAL), EPICLON N-740, EPICLON N-770, and EPICLON N-775 (all manufactured by DIC CORPORATION).

Examples of commercial products of cresol novolak type epoxy resins may include EPICLON N-660, EPICLON N-665, EPICLON N-670, EPICLON N-673, EPICLON N-695 (all manufactured by DIC CORPORATION), EOCN-1020, EOCN-102S, and EOCN-104S (all manufactured by NIPPON KAYAKU CO., LTD.) .

Examples of commercial products of resorcinol type epoxy resins may include DENACOL (registered trademark, omitted hereinafter) EX-201 (viscosity: 250 mPa·s) (manufactured by NAGASE CHEMTEX CORPORATION).

Examples of commercial products of epoxy resins having a naphthalene skeleton may include EPICLON HP4032 (manufactured by DIC CORPORATION), NC-7000, and NC-7300 (both manufactured by NIPPON KAYAKU CO., LTD.).

Examples of commercial products of trisphenylmethane type epoxy resins may include TMH-574 (manufactured by SUMITOMO CHEMICAL CO., LTD.).

Examples of commercial products of dicyclopentadiene type epoxy resins may include EPICLON HP7200, EPICLON HP7200L, EPICLON HP7200H (all manufactured by DIC CORPORATION), Tactix (registered trademark) 558 (manufactured by HUNTSMAN ADVANCED MATERIALS), XD-1000-1L, and XD-1000-2L (both manufactured by NIPPON KAYAKU CO., LTD.).

Examples of commercial products of epoxy resins modified with urethane or isocyanate may include AER4152 (manufactured by ASAHI KASEI E-MATERIALS CORP.) having an oxazolidone ring.

Examples of epoxy resins derived from precursor carboxylic acid may include glycidylated phthalic acid, hexahydrophthalic acid, glycidylated dimer acid, and various isomers thereof.

Examples of commercial products of diglycidyl phthalate may include EPOMIK (registered trademark, omitted hereinafter) R508 (viscosity: 4000 mPa·s) (manufactured by MITSUI CHEMICALS INC.) and DENACOL EX-721 (viscosity: 980 mPa·s) (manufactured by NAGASE CHEMTEX CORPORATION).

Examples of commercial products of diglycidyl hexahydrophthalate may include EPOMIK R540 (viscosity: 350 mPa·s) (manufactured by MITSUI CHEMICALS INC.) and AK-601 (viscosity: 300 mPa·s) (manufactured by NIPPON KAYAKU CO., LTD.).

Examples of commercial products of diglycidyl ester of dimer acid may include jER 871 (viscosity: 650 mPa·s) (manufactured by MITSUBISHI CHEMICAL) and EPOTOHTO YD-171 (viscosity: 650 mPa·s) (manufactured by NIPPON STEEL CHEMICAL).

Examples of epoxy resins derived from precursor compounds having intramolecular unsaturated carbon may include alicyclic epoxy resins.

More specifically, examples of commercial products of (3',4'-epoxycyclohexane) methyl-3,4-epoxycyclohexane carboxylate may include CELLOXIDE (registered trademark, omitted hereinafter) 2021P (viscosity: 250 mPa·s) (manufactured by DAICEL CHEMICAL INDUSTRIES, LTD.) and CY179 (viscosity: 400 mPa·s) (manufactured by HUNTSMAN ADVANCED MATERIALS), examples of commercial products of (3',4'-epoxycyclohexane) octyl-3,4-epoxycyclohexane carboxylate may include CELLOXIDE 2081 (viscosity: 100 mPa·s) (manufactured by DAICEL CHEMICAL INDUSTRIES, LTD.), and examples of commercial products of 1-methyl-4-(2-methyloxiranyl)-7-oxabiscyclo [4.1.0] heptane may include CELLOXIDE 3000 (viscosity: 20 mPa·s) (manufactured by DAICEL CHEMICAL INDUSTRIES, LTD.).

The 25 °C viscosity of epoxy resins which are in liquid form at 25 °C is lower the better in view of tackiness and draping properties. The 25 °C viscosity of the epoxy resins is preferably not lower than 5 mPa·s, which is the minimum available as a commercial epoxy resin, and not higher than 20000 mPa·s, more preferably not lower than 5 mPa·s and not higher than 15000 mPa·s. At over 20000 mPa·s, tackiness and draping properties may be deteriorated.

Epoxy resins in solid form at 25 °C are preferable for its higher aromatic contents, which imparts improved fire resistance, and examples may include epoxy resins having a biphenyl skeleton, epoxy resins having a naphthalene skeleton, or phenolaralkyl type epoxy resins.

In the composition of the present invention, the contents of components (A) and (B) are 70 to 78 mass%, preferably 70 to 75 mass% of component (A), and 22 to 30 mass%, preferably 25 to 30 mass% of component (B), respectively, with the total of components (A) and (B) being 100 mass%. When the content of component (A) is less than 65 mass%, while the content of component (B) is over 35 mass%, the ILSS of the resulting fiber reinforced composite material is low, and the glass transition temperature of the cured resin product is low.

The curing agent of component (C) of the present composition may be, for example, one or a mixture of two or more of aromatic amines, such as diethyl toluene diamine, meta phenylene diamine, diamino diphenyl methane, diamino diphenyl sulfone, meta xylene diamine, and derivatives thereof; aliphatic amines, such as triethylenetetramine and isophoronediamine; imidazole derivatives; dicyandiamide; tetramethylguanidine; carboxylic acid anhydrides, such as methylhexahydrophthalic anhydrides; carboxylic hydrazide, such as adipic hydrazide; carboxylic amide; monofunctional phenol; polyfunctional phenol compounds, such as bisphenol A; sulfonic acid esters, such as bis(4-hydroxyphenyl) sulfide; polyphenol compounds; polymercaptan; carboxylic acid salts; and Lewis acid complex, such as boron trifluoride ethylamine complex. Among these, one or a mixture of two or more of aromatic amines, sulfonic acid esters, monofunctional phenol or polyfunctional phenol compounds, such as bisphenol A, and polyphenol compounds are preferred.

The curing agent reacts with the benzoxazine of component (A) and the epoxy resin of component (B) to give a resin composition or a fiber-reinforced composite material having excellent resistance to heat and moisture.

In the present composition, the content of component (C) is 5 to 20 parts by mass, preferably 7 to 15 parts by mass with respect to 100 parts by mass of components (A) and (B) together. At less than 5 parts by mass, the curing reaction is slow, so that high temperature and long reaction time are required for increasing the cure degree of the entire resin composition. At over 20 parts by mass, mechanical properties, such as the glass transition temperature of the cured product may be poor.

The toughness improver of component (D) of the present composition is a component dissolvable in the present composition, and may be at least one of organic fine particles and a solution of organic fine particles in a liquid resin or a resin monomer.

As used herein, dissolution means that the fine particles of component (D) are dispersed in the composition, and in a uniform or commingled state due to the affinities of the fine particles and the substances constituting the composition to one another.

Examples of the liquid resin or the resin monomer may include reactive elastomers, HYCAR CTBN modified epoxy resins, HYCAR CTB modified epoxy resins, urethane-modified epoxy resins, epoxy resins to which nitrile rubber is added, epoxy resins to which cross-linked acrylic rubber fine particles are added, silicon-modified epoxy resins, and epoxy resins to which thermoplastic elastomer is added.

Examples of the organic fine particles may include thermosetting resin fine particles, thermoplastic resin fine particles, and mixtures thereof.

Examples of the thermosetting resin fine particles may include epoxy resin fine particles, phenol resin fine particles, melamine resin fine particles, urea resin fine particles, silicon resin fine particles, urethane resin fine particles, and mixtures thereof.

Examples of the thermoplastic resin fine particles may include copolymerized polyester resin fine particles, phenoxy resin fine particles, polyimide resin fine particles, polyamide resin fine particles, acrylic fine particles, butadiene-acrylonitrile resin fine particles, styrene fine particles, olefin fine particles, nylon fine particles, butadiene-alkylmethacrylate-styrene copolymers, acrylate-methacrylate copolymers, and mixtures thereof.

As acrylic fine particles, Nanostrength M22 (trade name, manufactured by ARKEMA) may be used, which is a commercially available methyl methacrylate-butylacrylate-methyl methacrylate copolymer.

The acrylic fine particles may be produced by: (1) polymerization of monomers, (2) chemical processing of polymers, or (3) mechanical pulverization of polymers. Method (3) is not preferred since particles obtained by this method are not fine and irregular in shape.

The polymerization may be carried out by, for example, emulsion polymerization, soap-free emulsion polymerization, dispersion polymerization, seed polymerization, suspension polymerization, or combination thereof. Among these, emulsion polymerization and/or seed polymerization may be employed to provide fine particles having minute diameters and a partially cross-linked, core/shell, hollow, or polar (epoxy, carboxyl, or hydroxyl group or the like) structure.

Examples of commercially available core/shell fine particles may include STAFILOID AC3355 (trade name, manufactured by GANZ CHEMICAL CO., LTD.), F351 (trade name, manufactured by ZEON CORPORATION), KUREHA PARALOID EXL-2655 (trade name, manufactured by KUREHA CHEMICAL INDUSTRY CO., LTD.), and MX120 (trade name, manufactured by KANEKA CORPORATION).

The content of component (D), which is employed for improving the toughness and the like of the resin, is 3 to 20 parts by mass, preferably 5 to 15 parts by mass with respect to 100 parts by mass of components (A) and (B) together. At less than 3 parts by mass, the toughness of the resin composition is low, which may cause generation of cracks during curing of the resin composition, whereas at over 20 parts by mass, the heat resistance of the resin composition may be low.

The polyamide 12 particles of component (E1) or (E2) of the present composition may preferably be capable of maintaining the powder state in the present composition and have a melting point of preferably not lower than 170 °C, more preferably 175 to 185 °C. As used herein, the melting point is a temperature at which the melting heat is at the peak as measured with a differential scanning calorimeter at a temperature raising rate of 10 °C per minute.

The average particle size of the polyamide 12 particles of component (E1) is not smaller than 1 µm and smaller than 15 µm, preferably not smaller than 5 µm and smaller than 15 µm. The average particle size of the polyamide 12 particles of component (E2) is not smaller than 15 µm and not larger than 60 µm, preferably not smaller than 15 µm and not larger than 30 µm. The reason for distinguishing component (E1) from component (E2) by their average particle sizes is that unless the contents of these components to be discussed later are not regulated to be different, the desired effects of the present invention will not be achieved.

As used herein, the average particle size refers to an average of the long axis diameter of each of the 100 arbitrarily-selected particles measured under a scanning electron microscope (SEM) at an enlargement of ×200 to ×500.

The polyamide 12 particles used in the present invention may be a commercial product, such as VESTOSINT1111, VESTOSINT2070, VESTOSINT2157, VESTOSINT2158, or VESTOSINT2159 (all registered trademarks, manufactured by DAICEL-EVONIK LTD.).

The polyamide 12 particles are preferably spherical particles so as not to impair the fluidity of the present composition, but aspherical particles may also be used.

The content of component (E1) in the first composition of the present invention is 20 to 30 parts by mass, preferably 20 to 25 parts by mass with respect to 100 parts by mass of components (A) and (B) together. At less than 20 parts by mass, the CAI is low, whereas at over 30 parts by mass, the ILSS may be low.

The content of component (E2) in the second composition of the present invention is not less than 5 parts by mass and less than 20 parts by mass, preferably 7 to 18 parts by mass with respect to 100 parts by mass of components (A) and (B) together. At less than 5 parts by mass, the CAI and the toughness are low, whereas at not less than 20 parts by mass, the ILSS is low, possibly resulting in incapability of achieving the desired effects of the present invention.

The present composition may optionally contain, for example, nanocarbon, flame retardant, or mold release agent, as long as the properties of the composition are not impaired.

Examples of nanocarbon may include carbon nanotubes, fullerene, and derivatives thereof.

Examples of the flame retardant may include red phosphorus; phosphoric acid esters, such as triphenyl phosphate, tricresyl phosphate, trixylenyl phosphate, cresyldiphenyl phosphate, xylenyldiphenyl phosphate, resorcinol bisphenyl phosphate, and bisphenol A bisdiphenyl phosphate; and boric acid esters.

Examples of the mold release agent may include silicon oil, stearic acid esters, and carnauba wax.

The present composition may be kneaded by any process without particular limitation, and may be kneaded in, for example, a kneader, planetary mixer, twin-screw extruder, or the like. For dispersion of the particle component, it is preferred to spread the particles in advance in the liquid resin component of the benzoxazine resin composition by means of a homo mixer, three-roll mill, ball mill, beads mill, or ultrasound. The processes, such as mixing with a matrix resin or preliminary spreading of the particles, may be carried out under heating/cooling and/or increased/reduced pressure, as required. It is preferred for good storage stability to immediately store the kneaded product in a refrigerator or a freezer.

The viscosity of the present composition is preferably 10 to 3000 Pa·s, more preferably 10 to 2500 Pa·s, most preferably 100 to 2000 Pa·s, at 50 °C in view of the tackiness and draping properties. At less than 10 Pa·s, the change in tackiness of the present composition with the lapse of time due to resin absorption into the fiber layer may be remarkable. At over 3000 Pa·s, the tackiness is low and the draping property may be deteriorated.

In the prepreg and the fiber-reinforced composite material of the present invention, the reinforcing fibers of the reinforcing fiber substrate may preferably be glass, carbon, graphite, aramid, boron, alumina, or silicon carbide fibers. A mixture of two or more of these fibers may be used, and for providing lighter and more durable molded products, carbon fibers and graphite fibers are preferably used.

In the present invention, various kinds of carbon fibers and graphite fibers maybe used depending on the application . For providing composite materials having excellent impact resistance, high rigidity, and good mechanical strength, the fibers preferably have a tensile modulus of elasticity measured by a strand tensile test of 150 to 650 GPa, more preferably 200 to 550 GPa, most preferably 230 to 500 GPa.

As used herein, the strand tensile test refers to a test wherein a bundle of carbon fibers are impregnated with a resin of the composition to be mentioned below, cured at 130 °C for 35 minutes, and the measurement is made according to JIS R7601 (1986).

In the prepreg and the fiber-reinforced composite material of the present invention, the form of the reinforcing fiber substrate is not particularly limited, and may be unidirectionally oriented continuous fibers, tow, fabrics, mats, knits, braids, and short fibers chopped into a length of less than 10 mm.

As used herein, the continuous fibers are monofilaments or fiber bundles which are substantially continuous for 10 mm or more. The short fibers are fiber bundles chopped into the length of less than 10 mm. For the applications particularly requiring high specific strength and specific elasticity, the reinforcing fiber bundles are most preferably unidirectionally oriented in arrangement, but easily handleable cloth (fabrics) may also be suitably used in the present invention.

The prepreg of the present invention is obtained by impregnating a reinforcing fiber substrate with the present composition.

The impregnation may be carried out by a wet method wherein the present composition is dissolved in a solvent, such as methyl ethyl ketone or methanol, to lower its viscosity and infiltrated, or by a hot melt method (dry method) wherein the present composition is heated to lower its viscosity and infiltrated.

The wet method includes soaking the reinforcing fiber substrate in a solution of the benzoxazine resin composition, drawing the fiber substrate up, and evaporating the solvent in an oven or the like. The hot melt method includes directly impregnating the reinforcing fiber substrate with the benzoxazine resin composition, of which viscosity has been lowered by heating; or applying the benzoxazine resin composition onto a release paper or the like to prepare a film of the composition, overlaying the reinforcing fiber substrate with the film on one or both sides, and subjecting the fiber substrate with the film to heat and pressure to infiltrate the resin into the reinforcing fiber substrate.

The hot melt method is preferred for substantially no solvent remaining in the obtained prepreg.

The prepreg of the present invention preferably has a reinforcing fiber content per unit area of the reinforcing fiber substrate of 70 to 3000 g/m². At less than 70 g/m², increased layers of prepreg are required for giving a predetermined thickness to the fiber-reinforced composite material, which may complicate the operation. On the other hand, at over 3000 g/m², the draping property of the prepreg tends to be deteriorated. When the prepreg is planar or simply curved, the reinforcing fiber content may exceed 3000 g/m². The weight fraction of fiber is preferably 30 to 90 mass%, more preferably 35 to 85 mass%, most preferably 40 to 80 mass%. At less than 30 mass%, the excess amount of resin may disturb the advantages of the fiber-reinforced composite material excellent in specific strength and specific elasticity, or excess amount of heat may be generated upon curing during molding of the fiber-reinforced composite material. At a weight fraction of fiber of over 90 mass%, impregnation defect of the resin may occur, resulting in composite materials with increased voids.

The prepreg of the present invention may be made into a fiber-reinforced composite material of the present invention by, after being laminated, curing the resin under heating while pressure is applied to the laminate.

The heat and pressure may be applied, for example, by press molding, autoclave molding, vacuum molding, tape-wrapping, or internal pressure molding.

The tape-wrapping includes winding prepreg around a core, such as a mandrel, to form a tubular body of the fiber-reinforced composite material, and is suitable for producing rod-shaped articles, such as golf shafts and fishing rods. More specifically, prepreg is wound around a mandrel, a wrapping tape made of a thermoplastic film is wound over the prepreg for fixing and applying pressure to the prepreg, heat-curing the resin in an oven, and withdrawing the mandrel, to obtain a tubular body.

The internal pressure molding includes wrapping prepreg around an inner pressure support, such as a thermoplastic resin tube, to give a preform, setting the preform in a mold, and introducing a highly pressurized gas into the internal pressure support to apply pressure to the preform while heating the mold to obtain a shaped product. This method is suitable for producing articles with complicated forms, such as golf shafts, bats, and tennis or badminton rackets.

The fiber-reinforced composite material of the present invention may alternatively be obtained by directly impregnating the substrate with the resin composition and curing the resin. For example, the fiber-reinforced composite material may be obtained by placing a reinforcing fiber substrate in a mold, pouring the present composition into the mold to impregnate the substrate with the composition, and curing the composition; or by laminating reinforcing fiber substrates and films of the present composition, and applying heat and pressure to the laminate.

As used herein, the films of the present composition refer to films prepared by applying a predetermined amount of the composition in a uniform thickness onto a release paper or a release film. The reinforcing fiber substrate may be unidirectionally oriented continuous fibers, bidirectional fabrics, nonwoven fabrics, mats, knits, or braids.

The term "laminate" encompasses not only simply overlaying fiber substrates one on another, but also preforming by adhering the fiber substrates onto various molds or core materials.

The core materials may preferably be foam cores or honeycomb cores. The foam cores may preferably be made of urethane or polyimide. The honeycomb cores may preferably be aluminum cores, glass cores, or aramid cores.

The fiber-reinforced composite material of the present invention has a compression after impact strength (CAI) of usually not lower than 250 MPa, preferably not lower than 290 MPa, an interlaminar shear strength (ILSS) of usually not lower than 45 MPa, preferably not lower than 50 MPa, and a bending fracture toughness of usually not lower than 1.0 MPa·m^{1/2}, preferably not lower than 1.2 MPa·m^{1/2}, and a cured product obtained by curing the present composition at 180 °C for 2 hours has a glass transition temperature of usually not lower than 180 °C, preferably not lower than 190 °C, all as measured under the conditions to be discussed later in Examples. Thus, the composite material of the present invention, which is capable of achieving excellent CAI, ILSS, and bending fracture toughness concurrently at high levels, as well as excellent glass transition temperature of the resin material therein, may suitably be used for railroad vehicles, aircrafts, building components, and other general industrial applications.

The present invention will now be explained specifically with reference to Examples, which are not intended to limit the present invention. Various properties were determined by the following methods. The results are shown in Tables 1 and 2.

### Examples 1 to 5 and Comparative Examples 1 to 9

In each of the Examples and Comparative Examples, the starting materials were mixed at a ratio shown in Tables 1 and 2 to prepare a benzoxazine resin composition.

The starting materials used are as follows:
Component (A): benzoxazine resin
   F-a (bisphenol F-aniline type, manufactured by SHIKOKU CHEMICALS CORPORATION)
   P-a (phenol-aniline type, manufactured by SHIKOKU CHEMICALS CORPORATION)
Component (B): epoxy resin
   CELLOXIDE (registered trademark) 2021P (manufactured by DAICEL CHEMICAL INDUSTRIES, LTD.)
   bisphenol A type diglycidyl ether (YD-128, manufactured by NIPPON STEEL CHEMICAL)
Component (C): curing agent
   bis(4-hydroxyphenyl) sulfide (manufactured by TOKYO CHEMICAL INDUSTRY CO., LTD.)
Component (D): toughness improver
   Nanostrength (M22, manufactured by ARKEMA) phenoxy resin (YP-70, manufactured by NIPPON STEEL CHEMICAL)
Component (E):
   VESTOSINT (registered trademark) 2157 (polyamide 12 with average particle size of 55 µm, manufactured by DAICEL-EVONIK LTD.)
   VESTOSINT (registered trademark) 2158 (polyamide 12 with average particle size of 20 µm, manufactured by DAICEL-EVONIK LTD.)
   VESTOSINT (registered trademark) 2159 (polyamide 12 with average particle size of 10 µm, manufactured by DAICEL-EVONIK LTD.)
   VESTOSINT (registered trademark) 2170 (polyamide 12 with average particle size of 5 µm, manufactured by DAICEL-EVONIK LTD.)

### <Measurement of Glass Transition Temperature>

The obtained benzoxazine resin composition was cured in an oven at 180 °C for 2 hours to obtain a cured resin product. The cured resin product was measured for the midpoint temperature as its glass transition temperature, using a differential scanning calorimeter (DSC) according to JIS K7121 (1987).

### <Prepreg Tackiness Test>

The obtained benzoxazine resin composition was applied to a release paper, and obtained a resin film. Two of the films were arranged on and beneath unidirectionally-oriented carbon fibers to infiltrate, thereby giving prepreg. The carbon fiber content per unit area of this prepreg was 150 g/m², and the matrix resin content per unit area was 67 g/m².

The tackiness of the obtained prepreg was determined by touching. Immediately after the release paper was peeled off of the prepreg surface, the prepreg was pressed with a finger. Those having moderate tackiness were marked with "+++", those having slightly too much or too little tackiness were marked with "++", and those having too much tackiness and unable to be peeled off of the finger, and those having too little tackiness and unable to stick to the finger were marked with "+".

### <Measurement of CAI>

The obtained prepregs were quasi-isotropically laminated in 32 plies in the [+45°/ 0°/-45°/90°]₄ₛ structure, and cured under heating in an autoclave at 180 °C under the pressure of 0.6 MPa for 2 hours, to thereby obtain CFRP. According to SACMA SRM 2R-94, a specimen of 150 mm in length × 100 mm in width was cut out from the CFRP, and drop weight impact at 6.7 J/mm was given on the specimen in the center to determine the compression after impact strength.

### <Measurement of ILSS>

The obtained prepregs were laminated in 12 plies in the direction of 0 degree, and cured under heating in an autoclave at 180 °C under the pressure of 0.6 MPa for 2 hours, to thereby obtain CFRP. According to ASTM D2402-07, a rectangular specimen of 13 mm in the 0° direction and 6.35 mm in width was cut out from the CFRP, and according to ASTM D2402-07, the specimen was soaked in warm water at 71 °C for 2 weeks to fully absorb water. Then the interlaminar shear strength of the specimen was determined at 82 °C.

### <Measurement of Bending Fracture Toughness>

A 6 mm thick cured resin product was obtained through INSTRON), the specimen was processed and tested according to ASTM D5045. Here, the toughness of the cured resin product refers to the critical stress intensity in Deformation Mode 1 (open type).

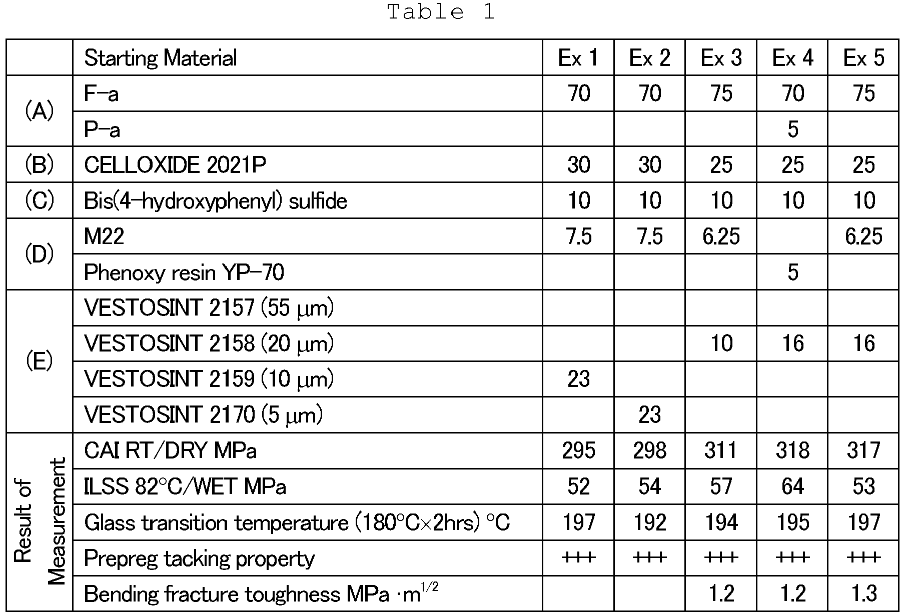

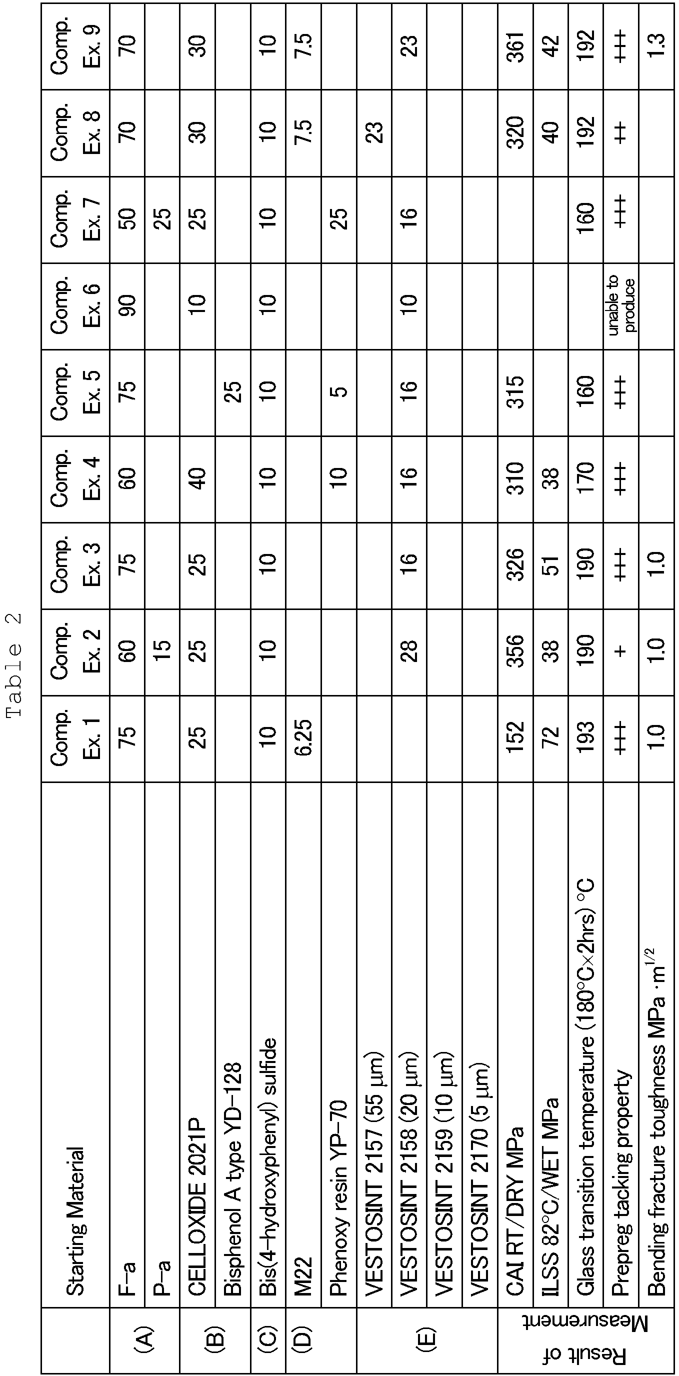

From Table 2, it is seen that: Comparative Example 1, which contained no component (E), was low in CAI and bending fracture toughness; Comparative Example 2, which contained no component (D) and a higher content of component (E), was low in ILSS and bending fracture toughness, and poor in prepreg tacking property; Comparative Example 3, which contained no component (D), was low in bending fracture toughness; Comparative Example 4, which contained a lower content of Component (A) and a higher content of Component (B), was low in ILSS and glass transition temperature; Comparative Example 5, which contained a higher content of bisphenol A type epoxy resin, was low in glass transition temperature; Comparative Example 6, which contained a higher content of component (A) and a lower content of component (B), was so high in viscosity that no prepreg was produced; Comparative Example 7, which contained a higher content of component (D), was low in glass transition temperature; and Comparative Examples 8 and 9, which contained a higher content of component (E), were low in ILSS.

## Claims

1. A benzoxazine resin composition comprising:
(A) a compound having in its molecule a benzoxazine ring represented by the formula (1): 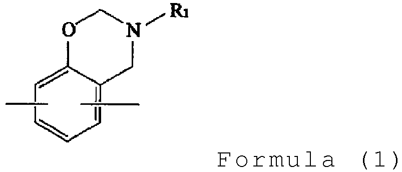 wherein R₁ stands for a chain alkyl group having 1 to 12 carbon atoms, a cyclic alkyl group having 3 to 8 carbon atoms, a phenyl group, or a phenyl group substituted with a chain alkyl group having 1 to 12 carbon atoms or a halogen, and a hydrogen atom is bonded to at least one of the carbon atoms of the aromatic ring at ortho- or para-position with respect to the carbon atom to which the oxygen atom is bonded;
(B) an epoxy resin;
(C) a curing agent;
(D) a toughness improver; and
(E1) polyamide 12 particles having an average particle size of not smaller than 1 µm and smaller than 15 µm determined as an average of the long axis diameter of 100 arbitrarily-selected particles measured under a scanning electron microscope (SEM) at an enlargement of ×200 to ×500;
wherein a content of said component (A) is 70 to 78 mass% and a content of said component (B) is 22 to 30 mass%, with a total of components (A) and (B) being 100 mass%,
wherein, with respect to 100 parts by mass of the total of components (A) and (B), a content of said component (C) is 5 to 20 parts by mass, a content of said component (D) is 3 to 20 parts by mass, and a content of said component (E1) is 20 to 30 parts by mass, and
wherein component (D) is dispersed in the composition, and in a uniform or commingled state.

2. A benzoxazine resin composition comprising:
(a) a compound having in its molecule a benzoxazine ring represented by formula (1): 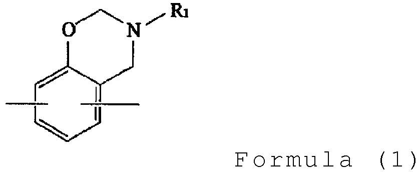 wherein R₁ stands for a chain alkyl group having 1 to 12 carbon atoms, a cyclic alkyl group having 3 to 8 carbon atoms, a phenyl group, or a phenyl group substituted with a chain alkyl group having 1 to 12 carbon atoms or a halogen, and a hydrogen atom is bonded to at least one of the carbon atoms of the aromatic ring at ortho- or para-position with respect to the carbon atom to which the oxygen atom is bonded;
(B) an epoxy resin;
(C) a curing agent;
(D) a toughness improver; and
(E2) polyamide 12 particles having an average particle size of not smaller than 15 µm and not larger than 60 µm determined as an average of the long axis diameter of 100 arbitrarily-selected particles measured under a scanning electron microscope (SEM) at an enlargement of ×200 to ×500;
wherein a content of said component (A) is 70 to 78 mass% and a content of said component (B) is 22 to 30 mass%, with a total of components (A) and (B) being 100 mass%;
wherein, with respect to 100 parts by mass of the total of components (A) and (B), a content of said component (C) is 5 to 20 parts by mass, a content of said component (D) is 3 to 20 parts by mass, and a content of said component (E2) is not less than 5 parts by mass and less than 20 parts by mass, and
wherein component (D) is dispersed in the composition, and in a uniform or commingled state.

3. The benzoxazine resin composition according to claim 1 or 2, wherein said toughness improver (D) is at least one selected from the group consisting of organic fine particles and a solution of organic fine particles in a liquid resin or a resin monomer.

4. The benzoxazine resin composition according to any one of claims 1 to 3, wherein said epoxy resin (B) is at least one epoxy resin selected from the group consisting of cresol novolak type epoxy resin, phenol novolak type epoxy resin, biphenyl type epoxy resin, naphthalene type epoxy resin, aromatic glycidyl ester type epoxy resins, aromatic amine type epoxy resins, resorcin type epoxy resins, and alicyclic type epoxy resins.

5. The benzoxazine resin composition according to any one of claims 1 to 4, wherein said curing agent (C) is at least one selected from the group consisting of aromatic amines, monofunctional phenols, polyfunctional phenol compounds, and polyphenol compounds.

6. Prepreg obtained by impregnating a reinforcing fiber substrate with the benzoxazine resin composition according to any one of claims 1 to 5.

7. A fiber-reinforced composite material comprising a cured product of the benzoxazine resin composition according to any one of claims 1 to 5, and a reinforcing fiber substrate.

8. The fiber-reinforced composite material according to claim 7, wherein said composite material has a compression after impact strength (CAI) of not lower than 290 MPa as measured according to SACMA SRM 2R-94, an interlaminar shear strength (ILSS) of not lower than 50 MPa as measured according to ASTM D2402-07, and a bending fracture toughness of not lower than 1.2 MPa·m^{1/2} as measured according to ASTM D5045, and a cured product obtained by curing said benzoxazine resin composition at 180 °C for 2 hours has a glass transition temperature of not lower than 190 °C.

## Patentansprüche

1. Benzoxazinharzzusammensetzung, umfassend:
(A) eine Verbindung mit einem Benzoxazinring, der durch die Formel (1) dargestellt ist, in ihrem Molekül: 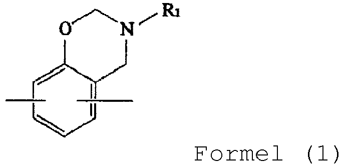 worin R₁ für eine kettenförmige Alkylgruppe mit 1 bis 12 Kohlenstoffatom(en), eine cyclische Alkylgruppe mit 3 bis 8 Kohlenstoffatomen, eine Phenylgruppe oder eine Phenylgruppe, die mit einer kettenförmigen Alkylgruppe mit 1 bis 12 Kohlenstoffatom(en) oder einem Halogen substituiert ist, steht, und ein Wasserstoffatom an mindestens eines der Kohlenstoffatome des aromatischen Rings in ortho- oder para-Position in Bezug auf das Kohlenstoffatom, an das das Sauerstoffatom gebunden ist, gebunden ist;
(B) ein Epoxidharz;
(C) ein Härtungsmittel;
(D) ein Mittel zur Verbesserung der Zähigkeit; und
(E1) Polyamid-12-Partikel mit einer durchschnittlichen Partikelgröße von nicht kleiner als 1 µm und kleiner als 15 µm, bestimmt als ein Durchschnittswert des Durchmessers der langen Achse von 100 zufällig ausgewählten Partikeln, gemessen unter einem Scanning-Elektronenmikroskop (SEM) mit einer Vergrößerung von x200 bis x500;
wobei ein Gehalt der Komponente (A) 70 bis 78 Massen-% beträgt und ein Gehalt der Komponente (B) 22 bis 30 Massen-% beträgt, wobei eine Gesamtheit der Komponenten (A) und (B) 100 Massen-% beträgt,
wobei in Bezug auf 100 Massenteile der Gesamtheit der Komponenten (A) und (B) ein Gehalt der Komponente (C) 5 bis 20 Massenteile beträgt, ein Gehalt der Komponente (D) 3 bis 20 Massenteile beträgt und ein Gehalt der Komponente (E1) 20 bis 30 Massenteile beträgt, und
wobei die Komponente (D) in der Zusammensetzung dispergiert ist und in einem gleichmäßigen oder vermischten Zustand vorliegt.

2. Benzoxazinharzzusammensetzung, umfassend:
(A) eine Verbindung mit einem Benzoxazinring, der durch die Formel (1) dargestellt ist, in ihrem Molekül: 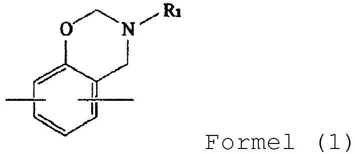 worin R₁ für eine kettenförmige Alkylgruppe mit 1 bis 12 Kohlenstoffatom(en), eine cyclische Alkylgruppe mit 3 bis 8 Kohlenstoffatomen, eine Phenylgruppe oder eine Phenylgruppe, die mit einer kettenförmigen Alkylgruppe mit 1 bis 12 Kohlenstoffatom(en) oder einem Halogen substituiert ist, steht, und ein Wasserstoffatom an mindestens eines der Kohlenstoffatome des aromatischen Rings in ortho- oder para-Position in Bezug auf das Kohlenstoffatom, an das das Sauerstoffatom gebunden ist, gebunden ist;
(B) ein Epoxidharz;
(C) ein Härtungsmittel;
(D) ein Mittel zur Verbesserung der Zähigkeit; und
(E2) Polyamid-12-Partikel mit einer durchschnittlichen Partikelgröße von nicht kleiner als 15 µm und nicht größer als 60 pm, bestimmt als ein Durchschnittswert des Durchmessers der langen Achse von 100 zufällig ausgewählten Partikeln, gemessen unter einem Scanning-Elektronenmikroskop (SEM) mit einer Vergrößerung von x200 bis x500;
wobei ein Gehalt der Komponente (A) 70 bis 78 Massen-% beträgt und ein Gehalt der Komponente (B) 22 bis 30 Massen-% beträgt, wobei eine Gesamtheit der Komponenten (A) und (B) 100 Massen-% beträgt,
wobei in Bezug auf 100 Massenteile der Gesamtheit der Komponenten (A) und (B) ein Gehalt der Komponente (C) 5 bis 20 Massenteile beträgt, ein Gehalt der Komponente (D) 3 bis 20 Massenteile beträgt und ein Gehalt der Komponente (E2) nicht weniger als 5 Massenteile und weniger als 20 Massenteile beträgt, und
wobei die Komponente (D) in der Zusammensetzung dispergiert ist und in einem gleichmäßigen oder vermischten Zustand vorliegt.

3. Benzoxazinharzzusammensetzung nach Anspruch 1 oder 2, wobei das Mittel zur Verbesserung der Zähigkeit (D) mindestens eines ist, das ausgewählt ist aus der Gruppe, bestehend aus organischen feinen Partikeln und einer Lösung organischer feiner Partikel in einem flüssigen Harz oder einem Harzmonomer.

4. Benzoxazinharzzusammensetzung nach einem der Ansprüche 1 bis 3, wobei das Epoxidharz (B) mindestens ein Epoxidharz ist, das ausgewählt ist aus der Gruppe, bestehend aus einem Epoxidharz vom Cresol-Novolak-Typ, einem Epoxidharz vom Phenol-Novolak-Typ, einem Epoxidharz vom Biphenyltyp, einem Epoxidharz vom Naphthalintyp, Epoxidharzen vom aromatischen Glycidylestertyp, Epoxidharzen vom aromatischen Amintyp, Epoxidharzen vom Resorcintyp und Epoxidharzen vom alicyclischen Typ.

5. Benzoxazinharzzusammensetzung nach einem der Ansprüche 1 bis 4, wobei das Härtungsmittel (C) mindestens eines ist, das ausgewählt ist aus der Gruppe, bestehend aus aromatischen Aminen, monofunktionellen Phenolen, polyfunktionellen Phenolverbindungen und Polyphenolverbindungen.

6. Prepreg, erhalten durch Imprägnieren eines Verstärkungsfasersubstrats mit der Benzoxazinharzzusammensetzung nach einem der Ansprüche 1 bis 5.

7. Faserverstärktes Kompositmaterial, umfassend ein gehärtetes Produkt der Benzoxazinharzzusammensetzung nach einem der Ansprüche 1 bis 5 und ein Verstärkungsfasersubstrat.

8. Faserverstärktes Kompositmaterial nach Anspruch 7, wobei das Kompositmaterial eine Compression-After-Impact-Strength (CAI) (Restfestigkeit nach Vorschädigung) von nicht weniger als 290 MPa, gemessen gemäß SACMA SRM 2R-94, eine interlaminare Scherfestigkeit (ILSS) von nicht weniger als 50 MPa, gemessen gemäß ASTM D2402-07, und eine Biegebruchzähigkeit von nicht weniger als 1,2 MPa·m^{1/2}, gemessen gemäß ASTM D5045, aufweist, und ein gehärtetes Produkt, erhalten durch Härten der Benzoxazinharzzusammensetzung bei 180°C für 2 Stunden, eine Glasübergangstemperatur von nicht weniger als 190°C aufweist.

## Revendications

1. Composition de résine de benzoxazine comprenant :
(A) un composé ayant dans sa molécule un cycle benzoxazine représenté par la formule (1) : 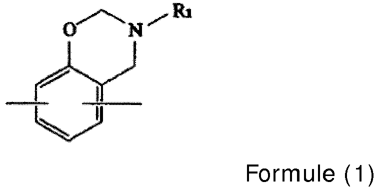 où R₁ représente un groupe alkyle à chaîne ayant 1 à 12 atomes de carbone, un groupe alkyle cyclique ayant 3 à 8 atomes de carbone, un groupe phényle ou un groupe phényle substitué avec un groupe alkyle à chaîne ayant 1 à 12 atomes de carbone ou un halogène, et un atome d'hydrogène est lié à au moins l'un des atomes de carbone du cycle aromatique à la position ortho ou para par rapport à l'atome de carbone auquel l'atome d'oxygène est lié ;
(B) une résine époxyde ;
(C) un agent de durcissement ;
(D) un agent améliorant la ténacité ; et
(E1) des particules de polyamide 12 ayant une dimension de particule moyenne pas inférieure à 1 µm et inférieure à 15 µm déterminée sous forme d'une moyenne du diamètre de grand axe de 100 particules choisies de manière arbitraire mesurée sous un microscope électronique à balayage (MEB) à un grossissement de x200 à x500 ;
où une teneur dudit composant (A) est 70 à 78 % en masse et une teneur dudit composant (B) est 22 à 30 % en masse, avec un total des composants (A) et (B) étant 100 % en masse,
où, pour 100 parties en masse du total des composants (A) et (B), une teneur dudit composant (C) est 5 à 20 parties en masse, une teneur dudit composant (D) est 3 à 20 parties en masse et une teneur dudit composant (E1) est 20 à 30 parties en masse, et
où le composant (D) est dispersé dans la composition, et dans un état uniforme ou mélangé.

2. Composition de résine de benzoxazine comprenant :
(a) un composé ayant dans sa molécule un cycle benzoxazine représenté par la formule (1) : 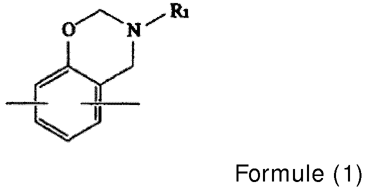 où R₁ représente un groupe alkyle à chaîne ayant 1 à 12 atomes de carbone, un groupe alkyle cyclique ayant 3 à 8 atomes de carbone, un groupe phényle ou un groupe phényle substitué avec un groupe alkyle à chaîne ayant 1 à 12 atomes de carbone ou un halogène, et un atome d'hydrogène est lié à au moins l'un des atomes de carbone du cycle aromatique à la position ortho ou para par rapport à l'atome de carbone auquel l'atome d'oxygène est lié ;
(B) une résine époxyde ;
(C) un agent de durcissement ;
(D) un agent améliorant la ténacité ; et
(E2) des particules de polyamide 12 ayant une dimension de particule moyenne pas inférieure à 15 µm et pas supérieure à 60 µm déterminée sous forme d'une moyenne du diamètre de grand axe de 100 particules choisies de manière arbitraire mesurée sous un microscope électronique à balayage (MEB) à un grossissement de x200 à x500 ;
où une teneur dudit composant (A) est 70 à 78 % en masse et une teneur dudit composant (B) est 22 à 30 % en masse, avec un total des composants (A) et (B) étant 100 % en masse,
où, pour 100 parties en masse du total des composants (A) et (B), une teneur dudit composant (C) est 5 à 20 parties en masse, une teneur dudit composant (D) est 3 à 20 parties en masse et une teneur dudit composant (E2) n'est pas inférieure à 5 parties en masse et inférieure à 20 parties en masse, et
où le composant (D) est dispersé dans la composition, et dans un état uniforme ou mélangé.

3. Composition de résine de benzoxazine selon la revendication 1 ou 2, où ledit agent améliorant la ténacité (D) est au moins un choisi dans le groupe consistant en les fines particules organiques et une solution de fines particules organiques dans une résine liquide ou un monomère de résine.

4. Composition de résine de benzoxazine selon l'une quelconque des revendications 1 à 3, où ladite résine époxyde (B) est au moins une résine époxyde choisie dans le groupe consistant en une résine époxyde de type novolaque du crésol, une résine époxyde de type novolaque du phénol, une résine époxyde de type biphényle, une résine époxyde de type naphtalène, les résines époxydes de type glycidylester aromatique, les résines époxydes de type amine aromatique, les résines époxydes de type résorcine et les résines époxydes de type alicyclique.

5. Composition de résine de benzoxazine selon l'une quelconque des revendications 1 à 4, où ledit agent de durcissement (C) est au moins un choisi dans le groupe consistant en les amines aromatiques, les phénols monofonctionnels, les composés phénoliques polyfonctionnels et les composés polyphénoliques.

6. Préimprégné obtenu par imprégnation d'un substrat de fibres de renforcement avec la composition de résine de benzoxazine selon l'une quelconque des revendications 1 à 5.

7. Matériau composite renforcé par des fibres comprenant un produit durci de la composition de résine de benzoxazine selon l'une quelconque des revendications 1 à 5 et un substrat de fibres de renforcement.

8. Matériau composite renforcé par des fibres selon la revendication 7, où ledit matériau composite a une résistance à la compression après impact (CAI) pas inférieure à 290 MPa telle qu'elle est mesurée selon SACMA SRM 2R-94, une résistance au cisaillement interlaminaire (ILSS) pas inférieure à 50 MPa telle qu'elle est mesurée selon ASTM D2402-07 et une ténacité à la rupture en flexion pas inférieure à 1,2 MPa.m^{1/2} telle qu'elle est mesurée selon ASTM D5045, et un produit durci obtenu par durcissement de ladite composition de résine de benzoxazine à 180°C pendant 2 heures a une température de transition vitreuse pas inférieure à 190°C.
